# EUROPÄISCHE PATENTSCHRIFT

(11) **EP 1 262 463 B1**
(45) Veröffentlichungstag und Bekanntmachung des Hinweises auf die Patenterteilung: **27.10.2004**
(21) Anmeldenummer: 01113477.2
(22) Anmeldetag: 02.06.2001
(51) Int. Cl.: C04B 14/10, C04B 26/06, C08F 20/06

(54) **Wässrige Rohstoffzusammensetzungen für keramische Werkstoffe**
Water-based raw material composition for ceramic materials
Composition aqueuse de matière première pour matériaux céramiques

(43) Veröffentlichungstag der Anmeldung: 04.12.2002
(73) Patentinhaber: Cognis Iberia, S.L., 08755 Castellbisbal, (Barcelona) (ES)
(72) Erfinder: Rovira, Xavier, 08720 Vilafranca del Penedes (Barcelona) (ES); Pi Subirana, Rafael, 08400 Granollers (Barcelona) (ES); Tuduri, Jaime, 08190 Sant Cugat del Vallès (ES); Valls, Ramon, 08022 Barcelona (ES)
(74) Vertreter: Fabry, Bernd, Dr.

(56) Entgegenhaltungen:
- EP-A- 0 635 454
- US-A- 4 503 172
- ROHINI KUMAR D B ET AL: "Acrylic co-polymer emulsion binders for green machining of ceramics" EUROPEAN POLYMER JOURNAL, PERGAMON PRESS LTD. OXFORD, GB, Bd. 36, Nr. 7, Juli 2000 (2000-07), Seiten 1503-1510, XP004193831 ISSN: 0014-3057

## Beschreibung

### Gebiet der Erfindung

Die Erfindung befindet sich auf dem Gebiet der Keramikrohstoffe und betrifft wässrige Rohstoffzusammensetzungen, ein Verfahren zur Herstellung der Keramikrohstoffe, Grünkörper und Endprodukte, die auf der Grundlage der Rohstoffe erhalten werden können sowie die Verwendung spezieller Polymerdispersionen als Dispergatoren.

### Stand der Technik

Die Herstellung von Keramiken ist ein aufwendiger Prozess, bei dem es darauf ankommt, stabile, aber geschmeidige Dispersionen von gemahlenem Minerallehm herzustellen, diese in Form zu bringen (sogenannte "Grünkörper"), gegebenenfalls zu emaillieren und schließlich zu brennen. Eine wichtige Aufgabe fällt dabei dem Dispergator zu, der sowohl dafür verantwortlich ist, dass die Dispersion nicht bricht (also eine zu niedrige Viskosität aufweist), als auch dafür, dass sie noch zu verarbeiten ist (also keine zu hohe Viskosität besitzt). Aus der EP 0635464 B1 (Kao) sind wässrige Rohstoffzusammensetzungen für die Keramikherstellung bekannt, welche nehmen Minerallehm und Alkalien ausgewählte Dispergatoren enthält, bei denen es sich um
(i) neutralisierte Homopolymere der Acrylsäure mit Molekulargewichten im Bereich von 2.000 bis 30.000,
(ii) neutralisierte Copolymere der Acryl- und Methacrylsäure mit Molekulargewichten im Bereich von 8.000 bis 30.000 oder
(iii) neutralisierte Copolymere der Acrylsäure und Maleinsäure mit Molekulargewichten im Bereich von 5.000 bis 25.000
handelt.

Die Aufgabe der vorliegenden Erfindung hat somit darin bestanden, neue wässrige Rohstoffzubereitungen zur Verfügung zu stellen, die sich bei gleichem Feststoffgehalt infolge niedrigerer Viskosität leichter verarbeiten lassen. Zu diesem Zweck sollten gleichzeitig neue Polymerdispersionen mit verbesserten Dispergiereigenschaften bereitgestellt werden.

### Beschreibung der Erfindung

Gegenstand der Erfindung sind wässrige Rohstoffzusammensetzungen für keramische Werkstoffe, bestehend aus
(a) 50 bis 80 Gew.-% Minerallehm,
(b) 0,01 bis 5 Gew.-% eines wasserlöslichen Copolymers der Acrylsäure mit
   (b1) Dipropylenglycoldiacrylat (DPGDA),
   (b2) Tripropylenglycoldiacrylat (TPGDA),
   (b3) Acrylamidomethylpropansulfonsäure (AMPS), und/oder
   (b4) Acrylsäureethylester (AE), sowie
(c) 0,01 bis 5 Gew.-% einer anorganischen Alkaliverbindung
   mit der Maßgabe, dass sich die Mengenangaben mit Wasser zu 100 Gew.-% ergänzen.

Überraschenderweise wurde gefunden, dass die Polymerdispersionen bei gleichem Feststoffgehalt gegenüber den Produkten des zitierten Stands der Technik wesentlich fließfähiger und stabiler sind, wodurch auch die wässrigen Rohstoffzubereitungen eine deutlich niedrigere Viskosität besitzen.

### Minerallehme

Die Minerallehme, die die Komponente (a) repräsentieren, stellen die Grundlage der Keramiken dar; ihr Anteil an den Dispersionen beträgt 50 bis 80, vorzugsweise 60 bis 75 Gew.-%. Im Sinne der Erfindung ist ihre Auswahl unkritisch, diese erfolgt vielmehr seitens des Keramikfachmanns nach seinen Kriterien, beispielsweise der Festigkeit und Spröde beim Brand, der Temperaturfestigkeit, Bruchhärte, Kältebeständigkeit etc. Typische Beispiele für geeignete Minerallehme sind die lokalen Marken Moró, Galve, Villar und Masvell. Eine typische Mineralverteilung lautet wie folgt:
30 bis 75 Gew.-% SiO₂,
13 bis 35 Gew.-% Al₂O₃,
4 bis 8 Gew.-% Fe₂O₃,
0,5 bis 25 Gew.-% CaO,
0,2 bis 3 Gew.-% MgO,
0,1 bis 0,5 Gew.-% Na₂O,
3 bis 7 Gew.-% K₂O,
0,2 bis 1,5 Gew.-% TiO₂,
mit der Maßgabe, dass sich die Mengenangaben auf die Trockenmasse beziehen und sich zu 100 Gew.-% ergänzen.

### Polymere Dispergatoren

Die Copolymeren auf Acrylsäurebasis, die die Komponente (b) bilden, stellen bekannte Stoffe des Stands der Technik dar und werden beispielsweise als Verdickungsmittel in der Kosmetik oder zur Wasseraufbereitung eingesetzt. Stellvertretend für die umfangreiche Patentliteratur auf diesem Gebiet sei auf die **US 4,554,307** (Allied Colloids) verwiesen. Ein weiterer Gegenstand der Erfindung betrifft daher die Verwendung von wässrigen Dispersionen von Copolymeren, die als Monomere (a) Acrylsäure und
(b1) Dipropylenglycoldiacrylat (DPGDA),
(b2) Tripropylenglycoldiacrylat (TPGDA),
(b3) Acrylamidomethylpropansulfonsäure (AMPS), und/oder
(b4) Acrylsäureethylester (AE),
enthalten, als Dispergatoren zur Herstellung von wässrigen Rohstoffzubereitungen für Keramiken. Hierbei sind die Comonomeren (b1) und (b2) aus anwendungstechnischer Sicht bevorzugt. Einiges spricht dafür, dass die vorteilhaften Eigenschaften darauf zurückzuführen sind, dass die erfindungsgemäß einzusetzenden Polymeren dreidimensional vernetzt sind, während es sich bei den Polymeren gemäß EP 0653464 B1 um lineare Strukturen handelt. Das Gewichtsverhältnis Acrylsäure : Comonomer kann 90 : 10 bis 99 : 1 betragen, typischerweise beträgt der Anteil der Comonomeren 2 bis 6 und insbesondere 3 bis 5 Gew.-%. Die Herstellung der Polymere kann dabei in an sich bekannter Weise erfolgen, also beispielsweise indem man die Monomeren zusammen mit einem Starter (z.B. Wasserstoffperoxid, Natriumpersulfat, Ammoniumpersulfat) und einem Reduktions- bzw. Kettenübertragungsmittel (z.B. Thioglycolsäure, Butylmercaptan) vorlegt und dann unter Beachtung der stark exothermen Reaktion abreagieren lässt, unter Zusatz von Basen in den schwach alkalischen Bereich (pH 7,5 bis 8) bringt und mit Wasser auf die gewünschte Anwendungskonzentration, beispielsweise 30 bis 60 und insbesondere um 40 Gew.-% einstellt. Das Molekulargewicht der Polymere liegt typisch im Bereich von 2.000 bis 20.000, vorzugsweise 3.000 bis 10.000 und insbesondere um 5.000 Dalton. Dispersionen mit einem Feststoffgehalt von ca. 40 Gew.-% und weisen in der Regel Brookfield-Viskositäten (20 °C, Spindel 1, 10 Upm) von 300 bis 550 mPas auf. Die Einsatzmenge der Dispergatoren kann bezogen auf die wässrige Rohstoffzusammensetzung - 0,01 bis 5 Gew.-% betragen, üblicherweise liegt sie bei 0,1 bis 1 und insbesondere 0,2 bis 0,5 Gew.-%.

### Anorganische Alkaliverbindungen

Mineralien, wie beispielsweise Quarz oder Feldspat, besitzen typischerweise im sauren bzw. neutralen Bereich an der Oberfläche keine Ladung. Man bezeichnet den entsprechenden pH-Wert als "pH zpc" (pH zero point of charge). Diesen gilt es bei den Rohstoffzusammensetzungen zu vermeiden, da diese dann ihr Viskositätsmaximum besitzen. Zu diesem Zweck setzt man den Zubereitungen anorganische Alkaliverbindungen (Komponente c) zu, beispielsweise Natriumhydroxid oder Kaliumhydroxid, wobei die Mengen vorzugsweise so zu wählen sind, dass die Zubereitungen einen pH-Wert im Bereich von 8,5 bis 11, besser noch von 9 bis 10,5 aufweisen. Unter diesen Umständen werden dann Zubereitungen erhalten, die eine Viskosität nach Brookfield (20 °C, Spindel 1, 4 Upm) von weniger als 5000, vorzugsweise weniger als 2500 und insbesondere 500 bis 1000 mPas aufweisen.

### Keramische Endprodukte

Ein weiterer Gegenstand der Erfindung betrifft ein Verfahren zur Herstellung einer Rohstoffzusammensetzung für Keramiken, bei dem man eine wässrige Zubereitung aus Minerallehm, Dispergator und Alkaliverbindung wie oben beschrieben herstellt, diese - gegebenenfalls - entwässert und zerkleinert, wobei man ein trockenes Pulver erhält. Unter dem Begriff "trocken" soll hier ein Restwassergehalt von kleiner 7, vorzugsweise 3 bis 5 Gew.-% verstanden werden. Durch Formen der so erhaltenen Pulverzusammensetzungen werden Grünkörper für Keramiken erhalten, die ebenfalls einen Gegenstand der Erfindung darstellen. Ein letzter Gegenstand der Erfindung betrifft schließlich die Keramiken (z.B. Fliesen und Bodenplatten) selbst, die durch Brenner der zuvor hergestellten Grünkörper erhalten werden.

### Beispiele

**Beispiel H1.** In einem Polymerisationsreaktor wurden 25,2 g Acrylsäure, 1,6 g Dipropylenglycoldiacrylat (DPGDA) und 41,2 g Wasser vorgelegt und auf 10 °C gekühlt. Dann wurden unter starkem Rühren 1 g Ammoniumpersulfat in 1,6 g Wasser sowie 5,2 g Natriummetabisulfit in 13,1 g Wasser hinzugegeben. Innerhalb von 30 min stieg die Reaktion bis auf 105 °C an. Nachdem ein langsames Absinken anzeigte, dass die Reaktion abgeschlossen war, wurde mit wässriger Natriumhydroxidlösung auf pH 7,8 eingestellt und Wasser zugegeben, so dass eine milchig-weiße Dispersion mit einem Feststoffgehalt von 40 Gew.-% resultierte.

**Beispiel H2.** In einem Polymerisationsreaktor wurden 25,4 g Acrylsäure, 0,8 g Tripropylenglycoldiacrylat (TPGDA) und 41,2 g Wasser vorgelegt und auf 10 °C gekühlt. Dann wurden unter starkem Rühren 1 g Ammoniumpersulfat in 1,6 g Wasser sowie 5,2 g Natriummetabisulfit in 13,1 g Wasser hinzugegeben. Innerhalb von 30 min stieg die Reaktion bis auf 105 °C an. Nachdem ein langsames Absinken anzeigte, dass die Reaktion abgeschlossen war, wurde mit wässriger Natriumhydroxidlösung auf pH 7,8 eingestellt und Wasser zugegeben, so dass eine milchig-weiße Dispersion mit einem Feststoffgehalt von 40 Gew.-% resultierte.

**Beispiel H3.** In einem Polymerisationsreaktor wurden 300 g Wasser vorgelegt, auf 100 °C erhitzt und dann 30 min Stickstoff gespült. Anschließend wurden 272 g einer Mischung aus Acrylsäure und Methacrylsäure im Molverhältnis 1:1 sowie 48 g Acrylamidomethylpropansulfonsäure (AMPA) hinzugegeben. Unter starkem Rühren wurden innerhalb von 4 h 9,8 g Wasserstoffperoxid, 28 g Thioglycolsäure und 100 g Wasser hinzugegeben. Die Mischung wurde weitere 2 h bei 100 °C gerührt, dann abgekühlt, mit wässriger Natriumhydroxidlösung auf pH 7,5 eingestellt und mit Wasser verdünnt, so dass wiederum eine Dispersion mit einem Feststoffgehalt von etwa 40 Gew.-% resultierte. Das durchschnittliche Molekulargewicht des Polymers betrug 2.800.

**Beispiel H4.** In einem Polymerisationsreaktor wurden 350 g Wasser vorgelegt, auf 85 °C erhitzt und dann 30 min Stickstoff gespült. Anschließend wurden 358 g Acrylsäure und 40 g Acrylsäureethylester hinzugegeben. Unter starkem Rühren wurden innerhalb von 2 h 9,8 g Wasserstoffperoxid, 12,5 g Propylmercaptat und 120 g Wasser hinzugegeben. Die Mischung wurde eine weitere h bei 85 °C gerührt, dann abgekühlt, mit wässriger Natriumhydroxidlösung auf pH 7,5 eingestellt und mit Wasser verdünnt, so dass wiederum eine Dispersion mit einem Feststoffgehalt von etwa 40 Gew.-% resultierte. Das durchschnittliche Molekulargewicht des Polymers betrug 4.000.

**Anwendungstechnische Untersuchungen der Polymerdispersionen.** Verschiedene Polymerdispersionen wurden hergestellt und bei 20 bzw. 40 °C über einen Zeitraum von 1 bis 4 Wochen gelagert. Bestimmt wurde die Viskosität nach Brookfield (20 °C, Spindel 1, 10 Upm) sowie die Stabilität. Dabei bedeutet (++) unverändert stabil, (+) geringfügige Ausscheidungen, (-) deutliche Ausscheidungen und (--) getrennt. Die Ergebnisse sind in Tabelle 1 zusammengefasst. Die Beispiele 1 bis 4 sind erfindungsgemäß, die Beispiele V1 und V2 dienen zum Vergleich.

**Tabelle 1**

| **Dispersions-Viskositäten und Stabilitäten (Mengenangaben in Gew.-%)** | | | | | | |
|---|---|---|---|---|---|---|
| **Zusammensetzung** | **1** | **2** | **3** | **4** | **V1** | **V2** |
| Dispergator Beispiel H1 (M = 3.000) | 40 | - | - | - | - | - |
| Dispergator Beispiel H2 (M = 3.500) | - | 40 | - | - | - | - |
| Dispergator Beispiel H3 (M = 2.800) | - | - | 40 | - | - | - |
| Dispergator Beispiel H4 (M = 4.000) | - | - | - | 40 | - | - |
| Polyacrylat (M = 5.000) | - | - | - | - | 40 | - |
| Polyacrylat/methacrylat (M = 8.000) | - | - | - | - | - | 40 |
| Wasser | ad 100 | | | | | |
| Viskosität [mPas] | 350 | 400 | 550 | 520 | 650 | 650 |

| Stabilität | | | | | | |
|---|---|---|---|---|---|---|
| - nach 1 w (20 °C) | ++ | ++ | ++ | ++ | ++ | + |
| - nach 4 w (20 °C) | ++ | ++ | + | + | + | - |
| - nach 1 w (40 °C) | ++ | ++ | + | + | - | - |
| - nach 4 w (40 °C) | ++ | ++ | + | + | - | - |

Die Beispiele zeigen, dass die erfindungsgemäßen Polymerdispersionen gegenüber dem Stand der Technik eine deutlich niedrigere Viskosität und eine erheblich höhere Stabilität aufweisen.

**Anwendungstechnische Untersuchungen der Slurries.** In einer Kugelmühle wurde Lehm des Typs "Moró", Dispergator und Wasser vorgelegt. Die Mischung wurde 10 min vermahlen, wobei eine deutliche Erwärmung zu beobachten war, und dann auf Raumtemperatur abgekühlt. Die Viskosität wurde anschließend nach der Brookfield-Methode (20 °C, Spindel 1, 4 Upm) bestimmt. Die Ergebnisse sind in Tabelle 2 zusammengefasst. Die Beispiele 5 bis 8 sind erfindungsgemäß, die Beispiele V3 und V4 dienen zum Vergleich.

**Tabelle 1**

| **Slurry-Viskositäten (Mengenangaben in Gew.-%)** | | | | | | |
|---|---|---|---|---|---|---|
| **Zusammensetzung** | **5** | **6** | **7** | **8** | **V3** | **V4** |
| Lehm | 70 | | | | | |
| Dispergator Beispiel H1 (M = 3.000) | 1,2 | - | - | - | - | - |
| Dispergator Beispiel H2 (M = 3.500) | - | 1,2 | - | - | - | - |
| Dispergator Beispiel H3 (M = 2.800) | - | - | 1,2 | - | - | - |
| Dispergator Beispiel H4 (M = 4.000) | - | - | - | 1,2 | - | - |
| Polyacrylat (M = 5.000) | - | - | - | - | 1,2 | - |
| Polyacrylat/methacrylat (M = 8.000) | - | - | - | - | - | 1,2 |
| Wasser | ad 100 | | | | | |
| Viskosität [mPas] | 450 | 400 | 550 | 600 | 850 | 920 |
| pH-Wert | 9,3 | 9,7 | 9,5 | 9,4 | 9,3 | 9,5 |

Die Beispiele zeigen, dass die erfindungsgemäßen Zubereitungen gegenüber denen des Stands der Technik eine deutlich niedrigere Viskosität besitzen.

## Patentansprüche

1. Wässrige Rohstoffzusammensetzungen für keramische Werkstoffe, bestehend aus
(a) 50 bis 80 Gew.-% Minerallehm,
(b) 0,01 bis 5 Gew.-% eines wasserlöslichen Copolymers der Acrylsäure mit
(b1) Dipropylenglycoldiacrylat (DPGDA),
(b2) Tripropylenglycoldiacrylat (TPGDA),
(b3) Acrylamidomethylpropansulfonsäure (AMPS), und/oder
(b4) Acrylsäureethylester (AE), sowie
(c) 0,01 bis 5 Gew.-% einer anorganischen Alkaliverbindung
mit der Maßgabe, dass sich die Mengenangaben mit Wasser zu 100 Gew.-% ergänzen.

2. Wässrige Zusammensetzungen nach Anspruch 1, **dadurch gekennzeichnet, dass** sie Minerallehm enthalten, der - bezogen auf die Trockenmasse - die folgende Zusammensetzung aufweist:
30 bis 75 Gew.-% SiO₂,
13 bis 35 Gew.-% Al₂O₃,
4 bis 8 Gew.-% Fe₂O₃,
0,5 bis 25 Gew.-% CaO,
0,2 bis 3 Gew.-% MgO,
0,1 bis 0,5 Gew.-% Na₂O,
3 bis 7 Gew.-% K₂O,
0,2 bis 1,5 Gew.-% TiO₂,
mit der Maßgabe, dass sich die Mengenangaben zu 100 Gew.-% ergänzen.

3. Wässrige Zusammensetzungen nach den Ansprüchen 1 und/oder 2, **dadurch gekennzeichnet, dass** die anorganischen Alkaliverbindungen Natriumhydroxid oder Kaliumhydroxid darstellen.

4. Wässrige Zusammensetzungen nach mindestens einem der Ansprüche 1 bis 3, **dadurch gekennzeichnet, dass** sie einen pH-Wert im Bereich von 8,5 bis 11 aufweisen.

5. Wässrige Zusammensetzungen nach mindestens einem der Ansprüche 1 bis 4, **dadurch gekennzeichnet, dass** sie eine Viskosität nach Brookfield von weniger als 5000 mPas aufweisen.

6. Verfahren zur Herstellung einer Rohstoffzusammensetzung für Keramiken, bei dem man eine wässrige Zubereitung nach Anspruch 1 herstellt, diese gegebenenfalls entwässert und unter Erhalt eines Pulvers mit einem Restwassergehalt kleiner 7 Gew.-% zerkleinert.

7. Grünkörper für Keramiken, erhalten durch Formen einer Pulverzusammensetzung erhältlich nach Anspruch 6.

8. Keramikplatten, erhalten durch Brennen von Grünkörpern gemäß Anspruch 7.

9. Verwendung von wässrigen Dispersionen von Copolymeren, die als Monomere (a) Acrylsäure und
(b1) Dipropylenglycoldiacrylat (DPGDA),
(b2) Tripropylenglycoldiacrylat (TPGDA),
(b3) Acrylamidomethylpropansulfonsäure (AMPS), und/oder
(b4) Acrylsäureethylester (AE),
enthalten, als Dispergatoren zur Herstellung von wässrigen Rohstoffzubereitungen für Keramiken.

## Revendications

1. Compositions aqueuses de matières premières pour matériaux céramiques, constituées de
(a) 50 à 80 % en poids d'argile minérale,
(b) 0,01 à 5 % en poids d'un copolymère soluble dans l'eau de l'acide acrylique avec
(b1) le diacrylate de dipropylèneglycol (DPGDA),
(b2) le diacrylate de tripropylèneglycol (TPGDA),
(b3) l'acide acrylamidométhylpropanesulfonique (AMPS), et/ ou
(b4) l'ester éthylique de l'acide acrylique (AE), ainsi que
(c) 0,01 à 5 % en poids d'un composé alcalin inorganique
étant précisé que les indications quantitatives se complètent à 100 % avec de l'eau.

2. Compositions aqueuses selon la revendication 1,
**caractérisées en ce qu'**
elles contiennent de l'argile minérale qui présente - par rapport à la masse sèche - la composition suivante :
30 à 75 % en poids de SiO₂,
13 à 35 % en poids d'Al₂O₃,
4 à 8 % en poids de Fc₂O₃,
0,5 à 25 % en poids de CaO,
0,2 à 3 % en poids de MgO,
0,1 à 0,5 % en poids de Na₂O,
3 à 7 % en poids de K₂O,
0,2 à 1,5 % en poids de TiO₂,
étant précisé que les indications quantitatives se complètent à 100 % en poids.

3. Compositions aqueuses selon les revendications 1 et/ou 2,
**caractérisées en ce que**
les composés alcalins inorganiques correspondent à de l'hydroxyde de sodium ou à de l'hydroxyde de potassium.

4. Compositions aqueuses selon au moins une des revendications 1 à 3,
**caractérisées en ce qu'**
elles présentent un pH allant de 8,5 à 11.

5. Compositions aqueuses selon au moins une des revendications 1 à 4,
**caractérisées en ce qu'**
elles présentent une viscosité selon Brookfield inférieure à 5000 mPas.

6. Procédé de fabrication d'une composition de matière première pour céramiques, selon lequel on produit une préparation aqueuse selon la revendication 1, le cas échéant on la déshydrate et on la concasse de façon à obtenir une poudre avec une teneur résiduelle en eau inférieure à 7 % en poids.

7. Ebauches de céramiques obtenues par façonnage d'une composition de poudre que l'on peut obtenir selon la revendication 6.

8. Plaques de céramique obtenues par cuisson d'ébauches selon la revendication 7.

9. Utilisation de dispersions aqueuses de copolymères qui contiennent comme monomères (a) de l'acide acrylique et
(b1) du diacrylate de dipropylèneglycol (DPGDA),
(b2) du diacrylate de tripropylèneglycol (TPGDA),
(b3) de l'acide acrylamidométhylpropanesulfonique (AMPS), et/ou
(b4) de l'ester éthylique de l'acide acrylique (AE),
comme dispersants pour la fabrication de préparations aqueuses de matières premières pour céramiques.

## Claims

1. Water-containing raw material compositions for ceramic materials consisting of
(a) 50 to 80% by weight mineral loam,
(b) 0.01 to 5% by weight of a water-soluble copolymer of
(b1) dipropylene glycol diacrylate (DPGDA),
(b2) tripropylene glycol diacrylate (TPGDA),
(b3) acrylamidomethyl propanesulfonic acid (AMPS) and/or
(b4) acrylic acid ethyl ester (AE) and
(c) 0.01 to 5% by weight of an inorganic alkali metal compounds,
with the proviso that the quantities mentioned add to 100% by weight with water.

2. Water-containing compositions as claimed in claim 1, **characterized in that** they contain mineral loam with the following composition, based on dry weight:
30 to 75% by weight SiO₂,
13 to 35% by weight Al₂O₃,
4 to 8% by weight Fe₂O₃,
0.5 to 25% by weight CaO,
0.2 to 3% by weight MgO,
0.1 to 0.5% by weight Na₂O,
3 to 7% by weight K₂O,
0.2 to 1.5% by weight TiO₂,
with the proviso that the quantities mentioned add up to 100% by weight.

3. Water-containing compositions as claimed in claim 1, **characterized in that** the inorganic alkali metal compounds are sodium hydroxide or potassium hydroxide.

4. Water-containing compositions as claimed in at least one of claims 1 to 3, **characterized in that** they have a pH of 8.5 to 11.

5. Water-containing compositions as claimed in at least one of claims 1 to 4, **characterized in that** they have a Brookfield viscosity of less than 5,000 mPas.

6. A process for the production of a raw material composition for ceramics, in which the water-containing preparation claimed in claim 1 is produced, optionally freed from water and size-reduced to a powder with a residual water content of less than 7% by weight.

7. Green materials for ceramics obtained by molding the powder composition obtainable in accordance with claim 6.

8. Ceramic plates obtained by firing the green materials claimed in claim 7.

9. The use of aqueous dispersions of copolymers containing as monomers (a) acrylic acid and
(b1) dipropylene glycol diacrylate (DPGDA),
(b2) tripropylene glycol diacrylate (TPGDA),
(b3) acrylamidomethyl propanesulfonic acid (AMPS) and/or
(b4) acrylic acid ethyl ester (AE),
as dispersants for the production of raw material preparations for ceramics.
